# FASCICULE DE BREVET EUROPEEN

(11) **EP 0 889 670 B1**
(45) Date de publication et mention de la délivrance du brevet: **20.02.2002**
(21) Numéro de dépôt: 98401571.9
(22) Date de dépôt: 25.06.1998
(51) Int. Cl.: H04Q 11/04

(54) **Procédé de communication entre installations téléphoniques privées réliées à un réseau numérique à intégration de services.**
Kommunikationsverfahren zwischen Fernsprechnebenstellenanlagen verbunden mit einem dienstintegrierenden Digitalnetz
Communication method between private telephone exchanges connected to an integrated services digital network

(30) Priorité: 03.07.1997 FR 9708441
(43) Date de publication de la demande: 07.01.1999
(73) Titulaire: ALCATEL, 75008 Paris (FR)
(72) Inventeur: Bainier, Michel, 75019 Paris (FR); Dupain, Bertrand, 93320 Les Pavillons Sous Bois (FR)
(74) Mandataire: Sciaux, Edmond

(56) Documents cités:
- EP-A- 0 493 913
- EP-A- 0 667 723
- DE-A- 4 225 240
- US-A- 5 420 854
- PATENT ABSTRACTS OF JAPAN vol. 095, no. 004, 31 mai 1995 & JP 07 007756 A (HASEGAWA ELECTRIC COMPANY, LTD.), 10 janvier 1995

## Description

L'invention concerne un procédé de communication entre installations téléphoniques privées reliées à un réseau numérique à intégration de services ou RNIS

Le rattachement des installations téléphoniques numériques privées à un réseau RNIS est réalisé par l'intermédiaire d'accès normalisés dits de base ou primaire. Ces accès disposent chacun de canaux B ayant un débit de 64 kbit/s pour la transmission de données, ici dites de communication, correspondant le plus souvent à des signaux de parole, entre utilisateurs et un canal D ayant un débit de 16 ou éventuellement 64 kbit/s pour la signalisation utilisateur-réseau et éventuellement pour des données transmises à faible débit entre utilisateurs. La mise en liaison d'un utilisateur de terminal pour une communication téléphonique avec un autre utilisateur par l'intermédiaire d'un réseau RNIS conduit à l'exploitation d'un canal B d'une liaison multiplexe temporelle par l'utilisateur appelant pour la transmission des signaux de parole dont il est la source. Plusieurs canaux B peuvent être simultanément exploités par des utilisateurs raccordés à une même installation téléphonique pour des communications avec d'autres utilisateurs raccordés eux aussi à une même autre installation téléphonique. Tel est le cas par exemple lorsqu'une même entreprise dispose de deux établissements distants dont les personnels ont à communiquer entre eux par voie téléphonique et lorsque les installations téléphoniques respectives de ces établissements sont directement ou indirectement raccordées à un même réseau RNIS.

Sauf disposition particulière, chaque communication demandée par un utilisateur à partir d'un terminal téléphonique dans une installation vers un terminal téléphonique de l'autre installation est individuellement établie par l'intermédiaire d'une liaison multiplexe temporelle au travers du réseau RNIS qui unit ces installations et facturée en conséquence, exactement de la même manière que le serait une communication établie vers un terminal de réseau RNIS n'appartenant pas à une de ces deux installations. Une telle installation est par exemple divulguée dans le document EP 0 667 723 A. Pour différentes raisons l'exploitation des installations et celle du réseau RNIS ne sont pas optimales et s'avèrent donc plus coûteuses que nécessaire.

L'invention propose donc un procédé de communication entre installations téléphoniques privées, reliées à un réseau numérique à intégration de services, qui comportent chacune des moyens de compression-décompression permettant, d'une part, de compresser des données de communication reçues d'un nombre "n" de canaux B de manière à permettre leur transmission sous forme multiplexée par "n" sous-canaux de communication organisés dans le cadre d'un canal B, dit de support, comportant aussi un sous-canal pour l'échange de données, notamment de signalisation et, d'autre part, de réaliser les opérations inverses de décompression et de transfert.

Selon une caractéristique de l'invention, la mise en communication, via le réseau, d'un terminal d'une installation équipée de moyens de compression-décompression avec un terminal d'une autre installation similairement équipée comporte les phases suivantes:
- sélection des moyens de transmission, par canal B ou par sous-canal de communication d'un canal B de support, qui sont destinés à être exploités pour la communication par le terminal appelant et par le terminal appelé en tenant compte de la nature compressible ou non des données de communication à transmettre;
- transmission par canal B, en exploitant pour la signalisation correspondante le canal de signalisation D associé à ce canal B, si les données de communication à transmettre sont incompressibles,
- transmission par un sous-canal de communication des données de communication compressées par l'intermédiaire de moyens de compression-décompression respectivement prévus dans chacune des deux installations auxquelles sont rattachés le terminal appelant et le terminal appelé après établissement entre installations d'un canal B, dit de support, organisé en sous-canaux de communication pour une transmission de données de communication entre des moyens de compression-décompression des deux installations, ledit établissement impliquant alors:
   -- une mise en place préalable d'une liaison dans l'installation à laquelle est rattachée le terminal appelant entre ce terminal et lesdits moyens de compression-décompression de l'installation par l'intermédiaire d'un point d'accès, ici dit de conversion, ledit point d'accès de conversion étant sélectionné à la mise en place en fonction de sa capacité à permettre l'établissement d'un canal B avec l'installation du terminal appelé, s'il n'y a alors aucun canal de support B ayant un sous-canal de communication disponible entre les deux installations, ou alternativement l'exploitation d'un sous-canal de communication d'un canal de support B déjà établi entre les deux installations concernées,
   -- la réservation du sous-canal de communication pour la communication demandée par le terminal appelant vers le terminal appelé, les données de signalisation nécessaires à l'établissement de ladite communication étant alors échangées entre les installations par l'intermédiaire du sous-canal de signalisation comporté par le canal de support B dont fait partie le sous-canal de communication réservé, lorsque ce canal de support est déjà exploité.

L'invention propose aussi un agencement pour la mise en oeuvre du procédé selon l'invention au niveau d'une installation téléphonique privée incluant au moins un équipement de commutation, placé sous le contrôle d'une structure de commande, qui est relié par l'intermédiaire d'au moins un module d'accès à un réseau numérique à intégration de services et auquel des terminaux téléphoniques se raccordent par l'intermédiaire de modules d'accès, de manière à pouvoir établir des communications au travers de points d'accès de l'installation avec d'autres terminaux téléphoniques situés hors de cette installation par l'intermédiaire du reseau.

Cet agencement comporte des moyens de compression-décompression positionnés entre au moins un port de raccordement de point d'accès à un module d'accès au réseau et certains points d'accès dits de conversion pour, d'une part, compresser des données de communication fournies par une pluralité de canaux B de manière à permettre leur transmission par autant de sous-canaux de communication à débit moindre d'au moins un canal B, dit de support, et permettre un transfert de données, notamment de signalisation, par un sous-canal, ici dit de signalisation, du canal de support ainsi que, d'autre part, réaliser les opérations inverses de décompression et de transfert.

Selon une caractéristique de l'invention, l'agencement comporte des moyens logiciels au niveau de la structure de commande programmée de l'installation pour commander l'établissement d'au moins un canal de support B de liaison multiplexe temporelle avec une autre installation similairement équipée pour une pluralité de communications bidirectionnelles par sous-canaux de communication, si une tel canal de support n'est pas établi à réception d'un, appel d'un terminal appelant à destination d'un terminal appelé de ladite autre installation, soit encore pour réserver et exploiter un sous-canal de communication préalablement disponible d'un canal de support B déjà établi entre les deux installations, à partir du moment où, dans l'un ou l'autre cas, les données de communication à transmettre en cours de communication sont potentiellement compressibles.

L'invention, ses caractéristiques et ses avantages sont précisés dans la description qui suit en liaison avec les figures évoquées ci-dessous.

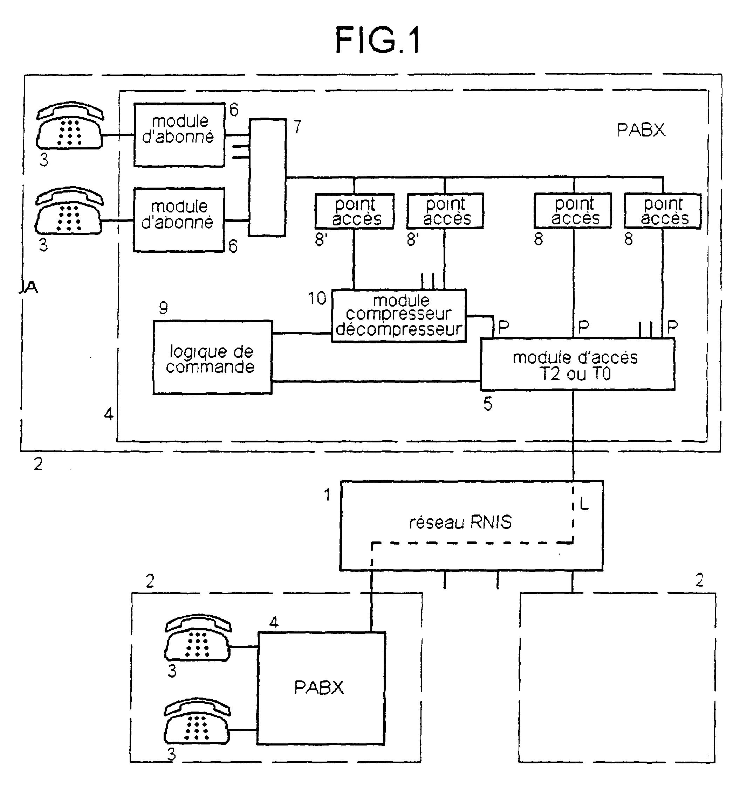

La figure 1 présente un schéma d'un ensemble de télécommunications comportant notamment un réseau RNIS et des installations téléphoniques d'usager reliées à ce réseau

La figure 2 présente un organigramme relatif au procédé de communication selon l'invention.

L'ensemble de télécommunications présenté sur la figure comporte au moins un réseau numérique à intégration de services couramment désigné par l'acronyme RNIS et ici référencé 1 ainsi que des installations téléphoniques d'usager 2, ici supposées de type numérique, qui sont raccordées à ce réseau. Des terminaux téléphoniques 3, par exemple des postes, des modems ou autres, sont rattachés à chaque installation téléphonique 2 et permettent l'établissement sélectif de communications téléphoniques entre eux et à la demande dans l'ensemble formé autour du réseau 1 et des installations téléphoniques 2 reliées à ce réseau.

Il est classiquement prévu qu'une communication téléphonique entre deux terminaux 3 par l'intermédiaire du réseau RNIS soit établie sur demande du terminal appelant par mise en place d'une liaison comprenant un canal B à 64 kbit/s de liaison multiplexe temporelle pour la transmission de données de communication entre ces terminaux.

Chaque installation 2 comporte un équipement de commutation 4 par exemple de type commutateur temporel numérique voix/données permettant aux terminaux rattachés à elle d'accéder aux canaux B et aux canaux de signalisation du réseau 1 auxquels l'installation à accès. Comme il est connu une installation peut notamment disposer d'un ou de plusieurs accès de base à 144 kbit/s correspondant chacun à deux canaux B à 64 kbit/s et un canal de signalisation à 16 kbit/s, ou d'un ou plusieurs accès au débit primaire comportant chacun vingt-trois ou trente canaux B à 64 kbit/s et un canal D à 64 kbit/s.

Le procédé et l'agencement selon l'invention sont plus particulièrement prévus pour être mis en oeuvre dans des installations téléphoniques d'usager 2 entre lesquelles un trafic important en matière de communication est prévu. Ceci est par exemple le cas entre des installations distantes desservant des établissements d'une même entreprise ou d'entreprises coopérantes. Un agencement selon l'invention présent dans une installation est ainsi susceptible d'être exploité pour des communications avec une ou plusieurs autres installations similairement équipées. Telles sont supposées être les trois installations 2 symbolisées sur la figure.

Chacune de ces installations 2, similairement équipées, se raccorde au réseau 1 par l'intermédiaire d'au moins un module d'accès 5, classiquement de type accès T0 ou T2 normalisé RNIS.

Les terminaux téléphoniques 3, éventuellement de simples téléphones comme présenté sur la figure, se relient par l'intermédiaire de modules d'abonné 6 à l'équipement de commutation 4 de l'installation auxquels ils sont rattachés.

Ces modules d'abonné 6, qui sont par exemple de type carte de circuit, permettent le raccordement des terminaux à un niveau correspondant à un point de référence R ou S selon la normalisation RNIS, suivant qu'il est nécessaire ou non d'associer un adaptateur RNIS au terminal.

Les modules d'abonné 6 d'une installation sont connectés à un commutateur 7 qui permet de les relier, sélectivement et à la demande, à des points d'accès 8 au réseau 1. Ces points d'accès sont reliés au réseau 1 par l'intermédiaire du ou d'un des module(s) d'accès 5 de l'installation. Une structure de commande programmée 9 contrôle le fonctionnement de l'installation 2, elle est classiquement organisée autour d'au moins un processeur auquel est associé un ensemble de mémoires et comporte aussi circuit d'horloge fonctionnant habituellement en liaison avec le système d'horloge du réseau 1, ces divers éléments n'étant pas représentés en tant que tels sur la figure. Des moyens logiciels permettent à cette structure de commande de gérer l'installation en particulier en matière de communication entre les terminaux téléphoniques qu'elle dessert et qui lui sont rattachés ainsi qu'entre ces terminaux et ceux qui sont extérieurs à cette installation et qui sont accessibles par l'intermédiaire du réseau 1 auquel l'installation est rattachée.

Comme il est connu, un réseau d'échange, partiellement représenté, relie directement ou indirectement la structure de commande 9 aux autres éléments constitutifs de l'installation 2 qu'elle régit.

Il est par ailleurs prévu d'associer au moins un module de compression-décompression 10 à certains des points d'accès d'une l'installation, ici dits de conversion et ici référencés 8', pour permettre la transmission par un même canal B, dit de support, des signaux relatifs à plusieurs communications établies entre cette installation et une autre installation 2, similairement équipée, qui comporte donc elle aussi un module de compression-décompression identique au module 10 ou compatible avec lui.

Un module de compression-décompression 10 est par exemple un circuit permettant de comprimer les données de communication provenant de canaux B à 64 kbit/s par autant de sous-canaux de communication à 8 kbit/s chacun et la signalisation provenant d'un canal D à 64 kbit/s par un sous-canal à 16 kbit/s, ainsi que d'effectuer une décompression correspondante de données de communication reçues compressées.

Le nombre "n" de canaux B simultanément compressés est susceptible de varier largement suivant la puissance de l'algorithme de compression/décompression mis en oeuvre, il est susceptible d'être choisi en fonction de la technique de transmission exploitée. Il est par exemple égal à six dans un exemple de réalisation où la transmission est de type synchrone.

Selon une variante de réalisation, la transmission des données compressées par un module de compression-décompression est réalisée sous forme asynchrone et par paquets, ou cellules, multiplexés temporellement dans des conditions permettant une restitution réaliste des signaux transmis par les terminaux auxquels ces signaux sont envoyés. Les conditions de transmission de signaux sous forme multiplexe temporelle asynchrone ne sont pas développées ici dans la mesure où elles sont bien connues de l'homme de métier.

Chaque module de compression-décompression est ici supposé inséré entre un des ports P de raccordement de point d'accès au niveau d'un module d'accès 5 et "n" points d'accès de conversion 8' de l'installation qui le comporte. Il est aussi possible de disposer de modules de compression-décompression permettant de desservir un nombre plus élevé de points d'accès de conversion et par exemple douze points d'accès de conversion dont les signaux sont distribués sur un canal de support B après compression.

Il n'est bien entendu pas toujours envisageable de compresser les signaux numériques transmis par un canal B. Tel est le cas en particulier lorsque ces signaux correspondent à des données qui doivent être restituées à l'identique à la réception et par exemple celles issues d'un modem. Une compression est par contre possible dans d'autres cas et en particulier lorsque les signaux transmis correspondent à des signaux sonores, tels que des signaux de parole numérisés.

Il est ainsi prévu que la mise en oeuvre du procédé de communication selon l'invention puisse être déclenchée, lorsqu'une telle compression est possible, l'utilisateur d'un terminal 3 d'une installation 2 équipée d'un agencement selon l'invention, par le terminal lui-même, ou par la structure de commande 9 de l'installation.

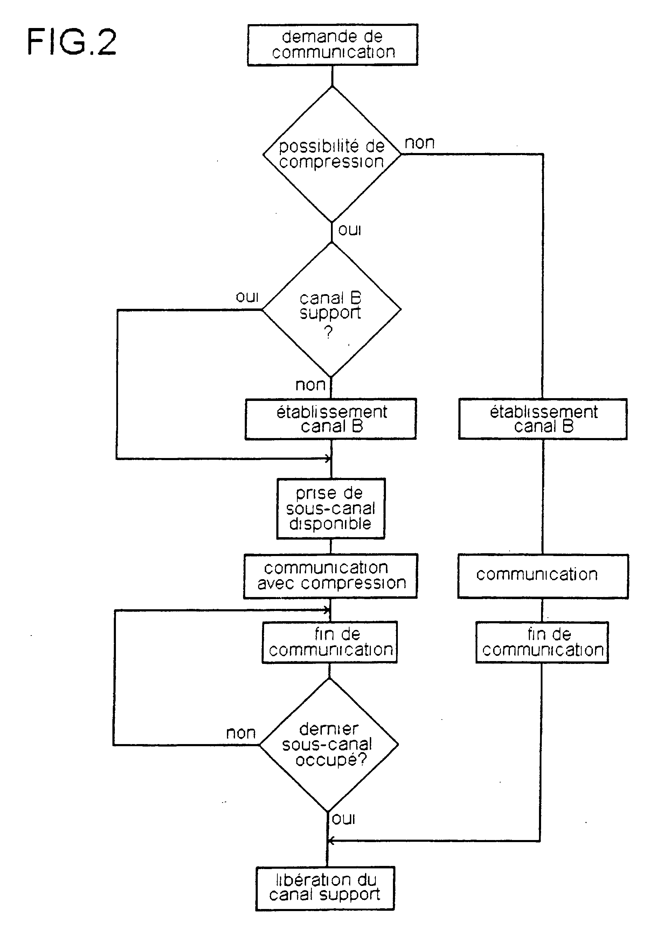

Comme montré sur l'ordinogramme de la figure 2, une demande d'établissement d'une communication à partir d'un terminal appelant vers un terminal appelé est susceptible soit de se traduire de manière classique par un canal B attribué à ces terminaux pour la durée de la communication sur une liaison multiplexe temporelle L reliant les installations auxquelles ces deux terminaux sont respectivement rattachés, soit préférablement par le procédé selon l'invention, lorsque cela est possible.

Lorsque les données de communication à transmettre sont compressibles le procédé selon l'invention est susceptible d'être mis en oeuvre ainsi que le montre la figure 2, par contre si ce n'est pas le cas, l'établissement de la communication doit être réalisée de la manière classique par l'intermédiaire d'un canal B réservé à la communication pour sa durée.

Par contre si les données de communication s'avèrent compressibles et si l'appel effectué par un terminal 3 d'une installation 2 équipée vers un terminal 3 d'une autre installation 2 similairement équipée se produit alors qu'aucun autre appel n'est alors établi par l'intermédiaire d'un point d'accès de conversion 8' entre ces deux installations, il est prévu de premières opérations qui sont effectuées par l'intermédiaire de moyens essentiellement logiciels de l'installation appelante. Ces moyens initie une demande, ici dite de service, en vue d'obtenir un canal B à 64 kbit/s pour une transmission d'informations depuis le terminal 3 appelant vers le terminal appelé par l'intermédiaire du réseau 1. Cet appel occasionne notamment l'émission des numéros respectifs des terminaux appelant et appelé, ainsi que d'une indication spécifique relative au module de compression-décompression par l'intermédiaire de laquelle la communication sera établie à partir du point d'accès 8' Le numéro appelé est pris en compte au niveau du réseau 1 ou plus précisément du ou des noeuds de commutation non représentés destinés à être traversés.

L'établissement du canal B à 64 kbit/s d'une liaison L permettant cette transmission au travers du réseau 1 est réalisé par des échanges de signalisation qui ne sont pas décrits ici dans la mesure où cet établissement et ces échanges sont réalisés d'une manière habituelle en ce qui concerne un réseau RNIS.

L'indication spécifique transmise est prise en compte par l'installation 2 à laquelle est rattachée le terminal 3 appelé et elle y déclenche un traitement d'appel entrant approprié, notamment pour faire établir une connexion interne entre le module d'accès 5 par lequel parvient l'appel et un module de compression-décompression dans cette installation. Parallèlement, une connexion a été établie entre d'une part le module de compression-décompression 10 auquel est relié le faisceau de points d'accès de conversion 8' choisi pour la mise en communication du terminal appelant dans l'installation à laquelle est rattaché ce terminal et d'autre part le module d'accès 5 de cette installation par l'intermédiaire de laquelle a été initié l'appel. Une signalisation est alors établie entre les deux installations par l'intermédiaire d'un sous-canal de signalisation d'un canal de support B d'une liaison multiplexe temporelle L établie entre les deux installations concernées. Ce sous-canal de signalisation est par exemple un sous-canal à 16 kbit/s, si le canal B qui le comporte est un canal à 64kbit/s d'une liaison multiplexe temporelle exploitée de manière synchrone.

Comme déjà évoqué plus haut en liaison avec la partie descriptive associée aux moyens de compression-décompression, le canal de support B à 64 kbit/s est par exemple subdivisé en six sous-canaux de transfert de données de communication à 8 kbit/s et un sous-canal de signalisation à 16 kbit/s.

Une phase de prise d'un sous-canal de communication disponible est alors déclenchée comme montré sur la figure 2, et un tel sous-canal est communément attribué au terminal appelant et au terminal appelé.

Alternativement, si l'appel effectué par un terminal 3 d'une installation 2 équipée vers un terminal 3 d'une autre installation 2 similairement équipée se produit alors qu'une autre communication est déjà établie par l'intermédiaire d'un sous-canal de communication d'un canal de support entre ces deux installations, et si au moins un autre sous-canal de communication est encore disponible sur ce canal de support B, il est prévu que ce sous-canal ou l'un de ces sous-canaux de communication disponible(s) sur ce canal de support B soit réservé à la communication en cours d'établissement. L'étape de réservation d'un canal B étant alors éliminée, puisqu'alors sans raison d'être.

Le sous-canal de signalisation du canal de support B considéré ci-dessus est exploité pour l'échange de données et notamment des données de signalisation nécessaires à l'établissement d'une telle communication par un sous-canal de communication disponible de ce canal support B dont déjà un autre sous-canal de communication est exploité.

Les logiques de commande des deux installations concernées mettent en oeuvre des programmes d'établissement de communication qui correspondent à ceux qu'elles exploitent pour l'établissement classique d'une communication par un canal B non partagé, les différences provenant essentiellement des moyens de transmission par sous-canal ou canal de signalisation mis en oeuvre.

Les signalisations transmises par un sous-canal de signalisation à 16 kbit/s d'un canal de support B d'une liaison L établie au travers du réseau RNIS ne sont pas prises en compte par ce réseau, car elles n'y sont pas considérées comme telles, puisqu'elles sont transmises en fait par l'intermédiaire d'un sous-canal qui est différent du canal de signalisation prévu au niveau de ce réseau. Ce sous-canal de signalisation permet aussi de transmettre éventuellement des données X25 ou des données relatives à la gestion des deux installations.

Après établissement d'un sous-canal de communication entre les deux installations pour une communication entre deux terminaux rattachés chacun à une de ces installations, les données de communication parvenant d'un terminal à un module de compression-décompression 10 sont compressées avant d'être transmises à des moyens permettant de les conditionner par exemple sous la forme d'octets et/ou de paquets ou cellules pour transmission par le sous-canal de communication par l'intermédiaire duquel ces données vont être transportées.

La libération d'une communication établie par l'intermédiaire d'un sous-canal de communication d'un canal B entre deux installations similairement équipées selon l'invention s'effectue par transmission de signalisation, via le sous-canal de signalisation prévu au niveau du canal de support B. Elle est donc sans effet sur le maintien en service actif du canal de support B considéré tant que subsiste au moins une autre communication par un autre sous-canal de communication de ce canal.

Tel n'est pas le cas si une libération concerne une communication par sous-canal de communication se trouvant être la dernière encore en cours au niveau d'un canal de support B ou si une transmission par l'intermédiaire du sous-canal de signalisation de ce canal de support est en cours. Comme connu une telle libération peut être déclenchée par l'un ou l'autre des deux terminaux alors en communication. Celle des deux installations au niveau de laquelle la libération est déclenchée prend alors en main le processus de libération et assure de manière prévue pour des terminaux reliés par un canal B d'une liaison RNIS classique. L'envoi de la signalisation de libération est alors effectué par l'installation libératrice via le canal de signalisation D de la liaison multiplexe temporelle de réseau RNIS qui comporte le canal de support B concerné.

Comme connu, cette signalisation de libération est transmise par ce canal D à chacun des noeuds du réseau traversés et à l'autre installation, elle permet de rendre disponible au niveau de ces noeuds et des deux installations préalablement en communication le créneau temporel jusqu'alors exploité par le canal de support B.

## Revendications

1. Procédé de communication entre installations téléphoniques privées (2), reliées à un réseau numérique à intégration de services (1), qui comportent chacune des moyens de compression-décompression (10) permettant, d'une part, la compression de données de communication reçues par l'intermédiaire d'un nombre entier "n" de canaux B de manière à permettre leur transmission sous forme multiplexée par "n" sous canaux organisés dans le cadre un autre canal B, dit de support, comportant aussi un sous-canal pour l'échange de données de signalisation et, d'autre part, le réalisation des opérations inverses de décompression et de transfert, **caractérisé en ce que** la mise en communication d'un terminal (3) d'une installation équipée de moyens de compression-décompression avec un terminal d'une autre installation similairement équipée comporte les phases suivantes:
- sélection des moyens de transmission (8 ou 8'), par canal B ou par sous-canal de communication d'un canal de support B, qui sont destinés à être exploités pour la communication par le terminal appelant et par le terminal appelé en tenant compte de la nature compressible ou non des données de communication à transmettre;
- transmission par canal B, en exploitant pour la signalisation correspondante le canal de signalisation D associé à ce canal B, si les données de communication à transmettre sont incompressibles,
- transmission par un sous-canal de communication des données de communication compressées par l'intermédiaire de moyens de compression-décompression (10) respectivement prévus dans chacune des deux installations auxquelles sont rattachés le terminal appelant et le terminal appelé, après établissement d'un canal de support B organisé en sous-canaux de communication pour une transmission de données de communication entre des moyens de compression-décompression des deux installations, ledit établissement impliquant alors:
-- une mise en place préalable d'une liaison dans l'installation à laquelle est rattachée le terminal appelant entre ce terminal et lesdits moyens de compression-décompression de l'installation par l'intermédiaire d'un point d'accès (8'), ici dit de conversion, ledit point d'accès de conversion étant sélectionné à la mise en place en fonction de sa capacité à permettre l'établissement d'un canal B avec l'installation du terminal appelé au travers du réseau, s'il n'y a alors aucun canal de support B ayant un sous-canal de communication disponible entre les deux installations, ou alternativement l'exploitation d'un sous-canal de communication d'un canal de support B déjà établi entre les deux installations concernées,
-- la réservation du sous-canal de communication pour la communication demandée par le terminal appelant vers le terminal appelé, les données de signalisation nécessaires à l'établissement de ladite communication étant alors échangées entre les installations par l'intermédiaire du sous-canal de signalisation comporté par le canal de support B dont fait partie le sous-canal de communication réservé, lorsque ce canal de support est déjà exploité.

2. Procédé, selon la revendication 1, dans lequel un numéro ou un préfixe spécifique d'appel généré à l'occasion d'une demande de mise en communication par un terminal appelant, vers un terminal appelé d'une autre installation similairement équipée de moyens de compression-décompression, entraîne une phase de recherche de route permettant de sélectionner à partir du numéro d'appel du terminal demandé, soit un canal de support B comportant des sous-canaux de communication disponibles, si une tel canal est établi entre l'installation du terminal appelant et celle du terminal appelé, soit l'établissement d'un tel canal de support, à partir d'un point d'accès de conversion lui-même sélectionné des critères prédéterminés, notamment de coût de communication au niveau de l'installation à laquelle est rattaché le poste appelant.

3. Procédé, selon l'une des revendications 1, 2, dans lequel en phase de fin de communication par sous-canaux de communication entre deux terminaux d'installations similairement équipées de moyens de compression-décompression, la signalisation de libération d'un sous-canal de communication est transmise par l'intermédiaire d'un sous-canal de signalisation du canal de support B où est inclus le sous-canal de communication exploité pour cette communication, si subsiste au moins une autre communication par sous-canal de communication dans ce canal de support B, et éventuellement par le canal de signalisation D associé de la liaison multiplexe temporelle qui comporte ce canal B, si ce dernier n'est plus exploité.

4. Procédé, selon l'une des revendications 1, 2, 3 dans lequel est prévu un multiplexage temporel synchrone des sous-canaux organisés dans le cadre d'au moins un canal B.

5. Procédé, selon l'une des revendications 1, 2, 3 dans lequel est prévu un multiplexage temporel asynchrone des sous-canaux organisés dans le cadre d'au moins un canal B.

6. Agencement pour la mise en oeuvre du procédé selon l'une des revendications précédentes **caractérisé en ce qu'**il comporte, au niveau d'une installation téléphonique privée (2) incluant au moins un équipement de commutation qui est placé sous le contrôle d'une structure de commande (9), qui est relié par l'intermédiaire d'au moins un module d'accès (5) à un réseau numérique à intégration de services (1) et auquel des terminaux téléphoniques se raccordent par l'intermédiaire de modules d'acces (6), de manière à pouvoir établir des communications au travers de points d'accès de l'installation avec d'autres terminaux téléphoniques situés hors de cette installation par l'intermédiaire du réseau, ledit agencement comportant des moyens de compression-décompression (10) positionnés entre au moins un port de raccordement de point d'accès à un module d'accès au réseau et certains points d'accès dits de conversion pour, d'une part, compresser des données de communication fournies par une pluralité de canaux B de manière à permettre leur transmission par autant de sous-canaux de communication à débit moindre d'au moins un canal B, dit de support, et permettre un transfert de données, notamment, de signalisation par un sous-canal, ici dit de signalisation, du canal de support, ainsi que, d'autre part, réaliser les opérations inverses de décompression et de transfert, ledit agencement étant **caractérisé en ce qu'**il comporte des moyens logiciels au niveau de la structure de commande programmée de l'installation pour commander l'établissement d'au moins un canal de support B de liaison multiplexe temporelle avec une autre installation similairement équipée pour une pluralité de communications bidirectionnelles par sous-canaux de communication, si une tel canal n'est pas établi à réception d'un appel d'un terminal appelant à destination d'un terminal appelé de ladite autre installation, soit encore pour réserver et exploiter un sous-canal de communication préalablement disponible d'un canal de support B déjà établi entre les deux installations, à partir du moment où, dans l'un ou l'autre cas, les données de communication à transmettre en cours de communication sont potentiellement compressibles.

7. Agencement selon la revendication 6, qui comporte des moyens logiciels au niveau de la structure de commande programmée de l'installation où il sont pour soit sélectionner une liaison multiplexe temporelle dont au moins un canal B comporte des sous-canaux de communication disponibles, si une telle liaison multiplexe temporelle est établie entre l'installation du terminal appelant et celle du terminal appelé, soit l'établissement d'une telle liaison au travers du réseau, à partir d'un point d'accès de conversion lui-même sélectionné en fonction de critères prédéterminés, notamment de coût de communication, au niveau de l'installation à laquelle est rattaché le poste appelant.

8. Agencement selon l'une des revendications 6, 7; qui comporte des moyens de compression-décompression insérés entres les modules d'abonné(6) des terminaux téléphoniques (3) de l'installation et des points d'accès (8') dits de conversion de cette installation.

9. Agencement selon l'une des revendications 6, 7; 8 qui comporte des moyens de transmission des données de communication échangées entre terminaux qui sont de type multiplex temporel synchrone.

10. Agencement selon l'une des revendications 6, 7; 8 qui comporte des moyens de transmission par paquets des données de communication échangées entre terminaux qui sont de type multiplex temporel asynchrone.

## Patentansprüche

1. Verfahren zur Kommunikation zwischen mit einem dienstintegrierenden digitalen Netz (1) verbundenen Fernsprechnebenstellenanlagen (2), die jeweils Kompressions-/Dekompressionsmittel (10) umfassen, die einerseits die Kompression von über eine ganze Zahl n von B-Kanälen empfangenen Kommunikationsdaten ermöglichen, um ihre Übertragung in gemultiplexter Form auf n Unterkanälen zu ermöglichen, die im Rahmen eines anderen B-Kanals, als Trägerkanal bezeichnet, organisiert sind, der auch einen Unterkanal für den Austausch von Signalisierungsdaten aufweist, und andererseits die Durchführung entgegengesetzter Dekompressions- und Übertragungsoperationen zu ermöglichen, **dadurch gekennzeichnet, dass** das Verbinden eines Endgeräts (3) einer mit Kompressions-/Dekompressionsmitteln ausgestatteten Anlage mit einem Endgerät einer anderen entsprechend ausgestatteten Anlage die folgenden Phasen umfasst:
- Auswahl der Übertragungsmittel (8 oder 8'), über einen B-Kanal oder einen Kommunikations-Unterkanal eines B-Trägerkanals, die zur Nutzung für die Kommunikation durch das anrufende Endgerät und das angerufene Endgerät vorgesehen sind, unter Berücksichtigung der Komprimierbarkeit oder Nichtkomprimierbarkeit der zu übertragenden Kommunikationsdaten;
- Übertragen auf dem B-Kanal unter Nutzung des diesem B-Kanal zugeordneten D-Kanals für die entsprechende Signalisierung, wenn die zu übertragenden Kommunikationsdaten inkompressibel sind,
- Übertragen, auf einem Kommunikations-Unterkanal, von Daten, die mit Hilfe von Kompressions-/Dekompressionsmitteln (10) komprimiert sind, die jeweils an jeder der zwei Anlagen vorgesehen sind, an die das anrufende Endgerät und das angerufene Endgerät angeschlossen sind, nach Herstellen eines in Kommunikations-Unterkanäle organisierten B-Trägerkanals für eine Übertragung von Kommunikationsdaten zwischen Kompressions-/Dekompressionsmitteln der zwei Anlagen, wobei das Herstellen impliziert:
-- das vorherige Einrichten einer Verbindung in der Anlage, an die das anrufende Endgerät angeschlossen ist, zwischen dem Endgerät und den Kompressions-/Dekompressionsmitteln der Anlage über einen Zugangspunkt (8'), hier als Konversionszugangspunkt bezeichnet, wobei der Konversionszugangspunkt beim Einrichten in Abhängigkeit von seiner Kapazität gewählt wird, die Herstellung eines B-Kanals mit der Anlage des angerufenen Endgerätes über das Netz zu ermöglichen, wenn kein B-Trägerkanal mit einem verfügbaren Unterkanal zwischen den zwei Anlagen vorhanden ist, oder alternativ die Nutzung eines Kommunikationsunterkanals eines bereits zwischen den zwei betreffenden Anlagen hergestellten B-Trägerkanals,
-- die Reservierung des KommunikationsUnterkanals für die vom anrufenden Endgerät zum angerufenen Endgerät verlangte Kommunikation, wobei die für die Einrichtung der Kommunikation notwendigen Signalisierungsdaten dann zwischen den Anlagen über den Signalisierungs-Unterkanal des B-Trägerkanals ausgetauscht werden, zu dem der reservierte Kommunikations-Unterkanal gehört, wenn dieser Trägerkanal bereits genutzt wird.

2. Verfahren nach Anspruch 1, bei dem eine spezifische Rufnummer oder Vorwahl bei einer Verbindungsanforderung durch ein anrufendes Endgerät zu einem angerufenen Endgerät einer anderen entsprechend mit Kompressions-/Dekompressionsmitteln ausgerüsteten Anlage zu einer Wegsuchphase führt, die es erlaubt, ausgehend von der Rufnummer des angeforderten Endgeräts entweder einen B-Trägerkanal mit verfügbaren Kommunikations-Unterkanälen, wenn ein solcher Kanal zwischen der Anlage des anrufenden Endgeräts und derjenigen des angerufenen Endgeräts eingerichtet ist, oder das Einrichten eines solchen Trägerkanals ausgehend von einem KonversionsZugangspunkt zu wählen, der seinerseits nach vorgegebenen Kriterien, insbesondere den Kommunikationskosten an der Anlage, an die die anrufende Station angeschlossen ist, ausgewählt wird.

3. Verfahren nach einem der Ansprüche 1,2, bei dem in der Phase des Endes der Kommunikation über Kommunikations-Unterkanäle zwischen zwei Endgeräten von in entsprechender Weise mit Kompressions-/Dekompressionsmitteln ausgerüsteten Anlagen die Signalisierung der Freigabe eines KommunikationsUnterkanals über einen Signalisierungs-Unterkanal des B-Trägerkanals übertragen wird, in dem der für diese Kommunikation genutzte Kommunikations-Unterkanal enthalten ist, wenn wenigstens eine andere Kommunikation über Kommunikations-Unterkanal in diesem B-Trägerkanal erhalten bleibt, und eventuell über den D-Signalisierungskanal übertragen wird, der der diesen B-Trägerkanal enthaltenden Zeitmultiplexverbindung zugeordnet ist, wenn letzterer nicht mehr genutzt wird.

4. Verfahren nach einem der Ansprüche 1, 2, 3, bei dem ein synchroner Zeitmultiplex der im Rahmen wenigstens eines B-Trägerkanals organisierten Unterkanäle vorgesehen ist.

5. Verfahren nach einem der Ansprüche 1, 2, 3, bei dem ein asynchroner Zeitmultiplex der im Rahmen wenigstens eines B-Trägerkanals organisierten Unterkanäle vorgesehen ist.

6. Anordnung zur Durchführung des Verfahrens nach einem der vorhergehenden Ansprüche, **dadurch gekennzeichnet, dass** sie an einer Fernsprechnebenstellenanlage (2), die wenigstens eine Vermittlungseinrichtung enthält und unter der Kontrolle einer Steuerstruktur (9) steht, die über wenigstens ein Zugangsmodul (5) mit einem dienstintegrierenden digitalen Netz (1) verbunden ist, und an die sich Fernsprechendgeräte über Zugangsmodule (6) anschließen, um Kommunikationen über Zugangspunkte der Anlage mit anderen Fernsprechendgeräten außerhalb dieser Anlage über das Netz herstellen zu können, wobei die Anordnung zwischen wenigstens einem Anschluss eines Zugangspunkts zu einem Netzzugangsmodul und bestimmten als Konversionszugangspunkte bezeichneten Zugangspunkten angebrachte Kompressions-/Dekompressionsmittel umfasst, um einerseits über eine Mehrzahl von B-Kanälen gelieferte Kommunikationsdaten zu komprimieren, um ihre Übertragung über genau so viele Kommunikations-Unterkanäle mit geringerer Rate wenigstens eines als Trägerkanal bezeichneten B-Kanals zu ermöglichen und um eine Datenübertragung, insbesondere von Signalisierungsdaten, über einen hier als Signalisierungs-Unterkanal bezeichneten Unterkanal des Trägerkanals zu ermöglichen, sowie andererseits die entgegengesetzten Operationen der Dekompression und Übertragung durchzuführen, wobei die Anordnung **dadurch gekennzeichnet ist, dass** sie Programmmittel an der programmierten Steuerstruktur der Anlage umfasst, um die Herstellung wenigstens eines B-Trägerkanals einer Zeitmultiplexverbindung mit einer anderen entsprechend ausgestatteten Anlage für eine Mehrzahl von Duplex-Kommunikationen über Kommunikations-Unterkanäle zu steuern, wenn ein solcher Kanal nicht bei Empfang eines Anrufs eines anrufenden Endgeräts, der für ein angerufenes Endgerät der anderen Anlage bestimmt ist, eingerichtet ist, oder um einen vorher verfügbaren Kommunikations-Unterkanal eines bereits zwischen den zwei Anlagen eingerichteten B-Trägerkanals zu reservieren und ab dem Zeitpunkt zu nutzen, wo im einen oder anderen Falle die im Laufe der Kommunikation zu übertragenden Kommunikationsdaten möglicherweise komprimierbar sind.

7. Anordnung nach Anspruch 6, mit Programmmitteln an der programmierten Steuerstruktur der Anlage zum Auswählen einer Zeitmultiplexverbindung, von der wenigstens ein B-Trägerkanal verfügbare Kommunikations-Unterkanäle aufweist, wenn eine solche Zeitmultiplexverbindung zwischen der Anlage des anrufenden Endgerätes und der des angerufenen Endgerätes eingerichtet ist, oder zum Einrichten einer solchen Verbindung über das Netz ausgehend von einem Konversionszugangspunkt, der seinerseits in Abhängigkeit von vorgegebenen Kriterien, insbesondere den Kommunikationskosten an der Anlage, an die die anrufende Station angeschlossen ist, ausgewählt wird.

8. Anordnung nach einem der Ansprüche 6, 7, mit Kompressions-Dekompressionsmitteln, die zwischen die Kundenmodule (6) der Fernsprechendgeräte (3) der Anlage und sogenannte Konversionszugangspunkte (8') der Anlage eingefügt sind.

9. Anordnung nach einem der Ansprüche 6, 7, 8, mit Mitteln zum Übertragen von Kommunikationsdaten, die zwischen Endgeräten vom synchronen Zeitmultiplextyp ausgetauscht werden.

10. Anordnung nach einem der Ansprüche 6, 7, 8, mit Mitteln zur Paketübertragung von Kommunikationsdaten, die zwischen Endgeräten vom asynchronen Zeitmultiplextyp ausgetauscht werden.

## Claims

1. A method of communication between private telephone installations (2) connected to an integrated services digital network (1) and which each include compression-decompression means (10) for, on the one hand, compressing call data received via an integer number "n" of B channels, to enable their transmission in multiplexed form by "n" subchannels organized within the context of another B channel, referred to as the support B channel and also including a subchannel for exchanging signalling data, and, on the other hand, performing converse decompression and transfer operations, **characterized in that** means for setting up a call between a terminal (3) of an installation equipped with compression-decompression means and a terminal of another, similarly equipped installation includes the following phases:
- selecting transmission means (8 or 8') on a B channel or on a communication subchannel of a support B channel to be used for the call by the calling terminal and by the called terminal, allowing for the compressible or non-compressible nature of call data to be transmitted;
- transmitting via the B channel, using the signalling D channel associated with that B channel for the corresponding signalling, if the call data to be transmitted is non-compressible,
- transmitting via a communication subchannel call data compressed by the compression-decompression means (10) respectively provided in each of the two installations to which the calling terminal and the called terminal are connected, after setting up a support B channel organized into communication subchannels for transmitting call data between compression-decompression means of the two installations, which setting up then entails:
-- prior setting up of a link in the installation to which the calling terminal is connected between that terminal and said compression-decompression means of the installation via an access point (8'), referred to here as a conversion access point, selected at set-up time as a function of its capacity to enable the setting up of a B channel to the installation of the called terminal via the network, if there is at that time no support B channel available between the two installations having a communication subchannel, or, alternatively, the use of a communication subchannel of a support B channel already set up between the two installations concerned, and
-- reserving the communication subchannel for the call to the called terminal requested by the calling terminal, the signalling data necessary for setting up said call being then exchanged between the installations via the signalling subchannel included in the support B channel of which the reserved communication subchannel is part, if that support channel is already in use.

2. A method according to claim 1, wherein a specific call prefix or number generated at the time of a call request by a calling terminal for a call to a called terminal of another installation similarly equipped with compression-decompression means leads to a route searching phase for selecting, on the basis of the call number of the called terminal, either a support B channel including available communication subchannels, if any such channel has been set up between the installation of the calling terminal and that of the called terminal, or setting up a support channel, from a conversion access point itself selected on the basis of predetermined criteria, in particular call cost criteria at the level of the installation to which the calling terminal is connected.

3. A method according to either claim 1 or claim 2, wherein, in the end phase of a communication subchannel call between two terminals of installations similarly equipped with compression-decompression means, the signalling for clearing down a communication subchannel is transmitted via a signalling subchannel of the support B channel including the communication subchannel used for the call, if there remains at least one other call via a communication subchannel of that support B channel, and possibly via the signalling D channel associated with the time-division multiplexed link including that B channel, if the latter is not used.

4. A method according to any of claims 1 to 3, including synchronous time-division multiplexing of the subchannels of at least one B channel.

5. A method according to any of claims 1 to 3, including asynchronous time-division multiplexing of the subchannels of at least one B channel.

6. A system for implementing a method according to any preceding claim, **characterized in that** it includes, in a private telephone installation (2) including at least one switching unit under the control of a control structure (9) which is connected via at least one access module (5) to an integrated services digital network [lacuna] and to which telephone terminals are connected via access modules (6) so that calls can be set up via access points of the installation with other telephone terminals outside that installation via the network, said system including compression-decompression means (10) between at least one port for connecting an access point to an access module providing access to the network and certain access points, referred to as conversion access points for, on the one hand, compressing call data supplied by a plurality of B channels to enable its transmission by the same number of communication subchannels of lower bit rate of at least one B channel, referred to as a support B channel, and enabling transfer of data, in particular of signalling data, via a subchannel, referred to here as a signalling subchannel, of the support channel, as well as, on the other hand, performing converse decompression and transfer operations, said system being **characterized in that** it includes software means in the programmed control structure of the installation for controlling the setting up of at least one time-division multiplexed support B channel to another, similarly equipped installation for a plurality of bidirectional communication subchannel calls, if no such channel has been set up on receiving a call request from a calling terminal for a call to a called terminal of said other installation, or to reserve and use a previously available communication subchannel of a support B channel already set up between the two installations, from the time at which, in either case, the call data to be transmitted during the call is potentially compressible.

7. A system according to claim 6, which includes software means in the programmed control structure of the installation including them for either selecting a time-division multiplexed link of which at least one B channel includes available communication subchannels, if any such time-division multiplexed link has been set up between the installation of the calling terminal and that of the called terminal, or setting up that kind of link via the network, from a conversion access point in turn selected as a function of predetermined criteria, in particular call cost criteria, at the level of the installation to which the calling terminal is connected.

8. A system according to either claim 6 or claim 7, which includes compression-decompression means inserted between the subscriber modules (6) of the telephone terminals (3) of the installation and access points (8') referred to as conversion access points of that installation.

9. A system according to any of claims 6 to 8, including means for transmitting call data exchanged between synchronous time-division multiplexed terminals.

10. A system according to any of claims 6 to 8, including means for transmitting in the form of packets call data exchanged between asynchronous time-division multiplexed terminals.
